# EUROPEAN PATENT APPLICATION

(11) **EP 1 404 067 A2**
(43) Date of publication of application: **31.03.2004**
(21) Application number: 03008129.3
(22) Date of filing: 07.04.2003
(51) Int. Cl.: H04L 12/56, H04L 12/28

(54) **Electronic apparatus and method for switching the destination of a wireless connection**

(30) Priority: 27.09.2002 JP 2002284500
(71) Applicant: Kabushiki Kaisha Toshiba, Tokyo (JP)
(72) Inventor: Tomoda, Ichiro, Kabushiki Kaisha Toshiba, Tokyo 105-8001 (JP)
(74) Representative: Henkel, Feiler & Hänzel

(57) **Abstract**

An electronic apparatus (1) for executing wireless communication with a first device (2) and a second device (3) comprises a unit for reproducing content data wirelessly transmitted from the first device (2) to the electronic apparatus (1), and a unit for establishing wireless connection between the electronic apparatus (1) and the second device (3) when the electronic apparatus (1) has received, during reproduction of the content data, a communication request via the first device (2) from the second device (3), that is wirelessly connected to the first device (2).

## Description

The present invention relates to an electronic apparatus for executing wireless communication, and to a connection destination switching method for use in the electronic apparatus.

Recently, attention has been paid to Bluetooth™ as a wireless communication technology. Bluetooth™ is a low-cost, low-power-consumption, short-range wireless communication technology suitable for mobile devices. Bluetooth™ is used for mutual connection of various mobile information devices owned by individual users. The devices are wirelessly connected and, compared to conventional connection by wire, the devices can be connected more freely, simply and easily.

As an example of a mobile information system using wireless communication, Jpn. Pat. Appln. KOKAI Publication No. 2002-112383 (pp. 3-4) discloses a system wherein a portable music player and headphones are wirelessly connected.

In a conventional wired connection system, headphones or a headset, for instance, needs to be connected to a portable music player over a wire cable in order to listen to music. In addition, in order to make a voice call, the headset needs to be connected to a mobile phone over a wire cable. Furthermore, in order to perform voice signal processing, the headset needs to be connected to a notebook personal computer over a wire cable.

The use of wireless connection makes it possible to effect quick connection between a headset or headphones and a desired device without re-connection of a wire cable.

Technical specifications of Bluetooth™ are standardized. Various communication devices, manufactured by different makers, can be mutually connected if communication according to Bluetooth™ is performed.

The Bluetooth™ standard is divided into parts called "profiles" associated with applications. Profiles relating to headsets are Head Set profile (HSP) and Advanced Audio Distribution Profile (A2DP).

The Head Set Profile (HSP) provides a function for connecting a headset and a telephone to perform a voice call. The Advanced Audio Distribution Profile (A2DP) provides a function for streaming-reproduction of audio data; such as music, by connecting a headset to a portable music player or the like.

In general, user interfaces, which can be provided on headphones or a headset, are limited. For example, it is difficult to equip the headphones or headset with a display. The number of buttons or switches, which can be provided on the headphones or headset, is limited. Hence, in practice, it is very difficult for the user to manipulate the headphones or headset thereby to select a device to be connected to the headphones or headset or to switch the connection-destination device.

A radio disturbance may possibly occur in wireless communication, and wireless connection or switching of a connection destination may fail due to it. An emergency measure for such a situation needs to be considered.

In particular, as regards the headset having the above-mentioned A2DP and HSP, there may be a case where a mobile phone has received an incoming call during reproduction of music by A2DP, and a voice call according to HSP needs to be started. In such a case, the destination of connection has to be switched immediately. It is thus necessary to realize a technique for switching the function of the headset from A2DP to HSP, and a technique for avoiding inconvenience to the user resulting from the failure of such switching.

Jpn. Pat. Appln. KOKAI Publication No. 2002-208996 (pp. 2-3) discloses, as a technique for linking a music reproduction function and a mobile phone, a structure wherein a reproducing apparatus is connected between a mobile phone and headphones. The internal operation mode of the reproducing apparatus is switched between a mode in which music data is sent to the headphones and a mode in which a voice call is performed between the mobile phone and headphones via the reproducing apparatus.

Jpn. Pat. Appln. KOKAI Publication No. 2002-9903 (pp. 2-3) discloses a portable audio player having a function of transmitting to headphones a signal indicating that an incoming call has been received by a mobile phone.

Neither Jpn. Pat. Appln. KOKAI Publication No. 2002-112383 nor Jpn. Pat. Appln. KOKAI Publication No. 2002-208996 presupposes a wireless network comprising a headset, a portable music player and a mobile phone. In an environment where a headset, a portable music player and a mobile phone are connected through a wireless network, if a voice call is performed between the headset and mobile phone via the portable music player, a transmission delay of a voice signal increases. Thus, when a voice call is performed, it is desirable to directly perform wireless communication between the headset and mobile phone.

In the environment where a headset, a portable music player and a mobile phone are connected through a wireless network, it is thus necessary to realize a technique for automatically switching a wireless connection mode among these devices.

The Bluetooth^{TM} wireless communication is carried out by a master/slave type communication system. In this system, one of a plurality of devices connected by Bluetooth™ functions as a master, and it controls communication with the other slave devices. Seven slaves at maximum can be connected to one master at the same time. Direct connection is permitted only between the master and each slave. Slaves cannot directly be connected.

In general, a multi-functional apparatus such as a personal computer functions as a master, and peripheral devices such as a headset, a mobile phone and a human interface device (mouse, keyboard, etc.) are connected as slaves to the personal computer. The headset and mobile phone are both slaves. Thus, in the master/slave type communication system, in the state in which the headset is connected to the personal computer, it is difficult to directly connect the headset and the mobile phone even if it has become necessary to perform a voice call.

Embodiments of the present invention provide an electronic apparatus for automatically switching a connection destination of wireless communication, and a connection destination switching method.

According to embodiments of the present invention, an electronic apparatus is provided for executing wireless communication with both a first device and a second device. The electronic apparatus comprises a wireless communication unit for wirelessly communicating with both the first device and the second device. The electronic apparatus further comprises a content data reproduction unit for reproducing content data transmitted from the first device to the electronic apparatus via a wireless connection between the first device and the electronic apparatus. In addition the electronic apparatus comprises a processor programmed for establishing a direct wireless connection between the electronic apparatus and the second device when the electronic apparatus has received a communication request from the second device via the first device.

Further embodiments of the present invention provide a method of executing wireless communication between an electronic apparatus and both a first device and a second device. The method comprises reproducing, in the electronic apparatus, content data wirelessly transmitted from the first device, functioning as a master, to the electronic apparatus, functioning as one of a plurality of slaves wirelessly connected to the master.

A master/slave relation between the first device and the electronic apparatus is released after the first device has received a communication request generated by the second device, functioning as another of the plurality of slaves wirelessly connected to the master. The electronic apparatus executes a connecting process for establishing a direct wireless connection between the electronic apparatus and the second device in response to the release of the master/slave relation between the first device and the electronic apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a wireless communication system using an electronic apparatus, according to an embodiment of the present invention;
FIG. 2 is a block diagram showing a functional configuration of a headset used in the wireless communication system shown in FIG. 1, according to an embodiment of the present invention;
FIG. 3 is a block diagram showing a functional configuration of a personal computer used in the wireless communication system shown in FIG. 1, according to an embodiment of the present invention;
FIG. 4 is a block diagram showing a functional configuration of a mobile phone used in the wireless communication system shown in FIG. 1, according to an embodiment of the present invention;
FIG. 5 illustrates procedures for automatically switching the connection destination of the headset used in the wireless communication system shown in FIG. 1, according to an embodiment of the present invention;
FIG. 6 is a block diagram illustrating a connection mode in the case of performing streaming-reproduction of audio data in the wireless communication system of FIG. 1, according to an embodiment of the present invention;
FIG. 7 is a flow chart illustrating an example of a process for automatically switching the connection destination of the headset used in the wireless communication system of FIG. 1, according to an embodiment of the present invention; and
FIG. 8 is a flow chart illustrating another example of a process for automatically switching the connection destination of the headset used in the wireless communication system of FIG. 1, according to an embodiment of the present invention.

Embodiments of the present invention will now be described with reference to the accompanying drawings.

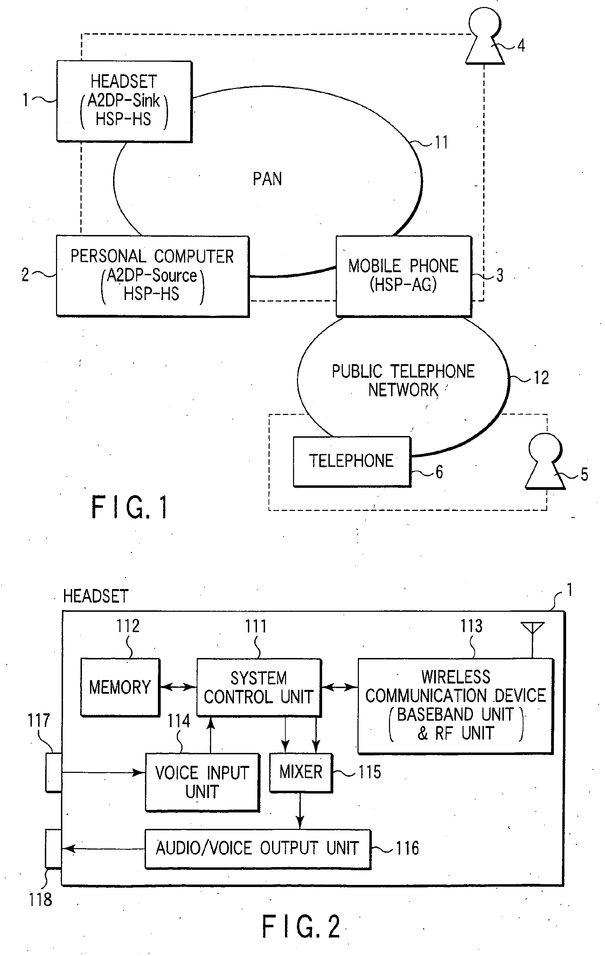

FIG. 1 shows an electronic apparatus 1 according to an embodiment of the invention, and a wireless communication system using the electronic apparatus 1. The electronic apparatus 1 is realized as a headset device (a speaker and a microphone) having a wireless communication function.

The headset 1 executes wireless communication according to, e.g. the Bluetooth™ standard. The headset 1 can communicate with other various devices with wireless communication functions according to the Bluetooth™ standard. In the Bluetooth™ standard, a master/slave type wireless communication method is employed, wherein wireless communication is executed between a master and each of slaves connected wirelessly to the master.

Assume that the headset 1 performs,wireless communication with a personal computer 2 and a mobile phone 3. The headset 1, personal computer 2 and mobile phone 3 constitute a personal area network (PAN) 11 that is a wireless network. The headset 1, personal computer 2 and mobile phone 3 are used by a user 4. The headset 1 has a sink function of Advanced Audio Distribution Profile (A2DP) and an HS (Head Set) function of Head Set Profile (HSP).

The sink function of A2DP is a function necessary for a transmission-destination device that receives audio data, such as music, to be streaming-reproduced. This function is used to reproduce an audio data stream sent by radio (i.e., wirelessly), while receiving the audio data stream.

The HS (Head Set) function of HSP is a function for performing a voice call in cooperation with the mobile phone 3. This function is used to execute transmission/reception of a voice signal for a voice call with the mobile phone 3.

The personal computer 2 comprises, for example, a notebook portable computer. The personal computer 2 has a source function of A2DP and an HS (Head Set) function of HSP.

The source function of A2DP is a transmission-side device function for streaming-reproduction. This function is used to transmit an audio data stream by radio. A music player is installed as an application program in the personal computer 2. The music player executes streaming-transmission of music data through a wireless connection for A2DP, which has been established between the personal computer 2 and the headset 1.

The mobile phone 3 is a device for performing a voice call with a destination-side telephone 6 connected via a public telephone network 12 (including a mobile telephone network) that is an external network. The mobile phone 3 has an AG (Audio Gateway) function of HSP for transmission/reception of a voice signal for a voice call with the personal computer 2 or headset 1. The AG (Audio Gateway) function of HSP is a function for performing a voice call between the personal computer 2 or headset 1 and the counterpart telephone 6 via the mobile phone 3. Assume that the telephone 6 is used by a user 5.

Referring to FIGS. 2 to 4, the structures of the headset 1, personal computer 2 and mobile phone 3 will now be described.

FIG. 2 shows a block diagram of an embodiment of the headset 1. The headset 1 is worn, in use, on the head of a user 4. The headset 1, as shown in FIG. 2, comprises a system control unit 111, a memory 112, a wireless communication device 113, a voice input unit 114, a mixer 115, an audio/voice output unit 116, a microphone 117, and a speaker 118.

The system control unit 111 is a processor provided for controlling the operation of the headset 1. The system control unit 111 executes a program stored in the memory 112, thereby controlling the wireless communication device 113, voice input unit 114, mixer 115 and audio/voice output unit 116.

The memory 112 comprises, e.g. a non-volatile memory device. The memory 112 stores a program for controlling the operation of the headset 1.
The program includes a routine for causing the system control unit 111 to execute the sink function of A2DP, and a routine for causing the system control unit 111 to execute the HS function of HSP.

The wireless communication device 113 is a device for executing wireless communication with the personal computer 2 or mobile phone 3 according, for example, to procedures of the Bluetooth™ standard. The wireless communication device 113 includes a baseband processing unit and an RF (Radio Frequency) unit. The wireless communication device 113 is used to receive audio data such as music sent from the personal computer 2 by radio, or to transmit/receive voice signals by radio to/from the mobile phone 3.

The voice input unit 114 converts voice of the user 4, which has been input via the microphone 117, from an analog signal to a digital signal, and delivers the digital signal to the system control unit 111. The mixer 115 is a circuit for mixing audio data such as music sent from the personal computer 2 and a voice signal sent from the mobile phone 3.

The audio/voice output unit 116 executes a data reproduction process for so-called streaming-reproduction. In the streaming-reproduction, the audio/voice output unit 116 receives an audio data stream of music, etc. sent from the personal computer 2 via the wireless communication device 113, system control unit 111 and mixer 115, and at the same time converts the audio data stream to an electric signal that can be output as sound from the speaker 118.

The audio/voice output unit 116 also executes a process for outputting a voice signal, which is sent from the mobile phone 3, via the speaker 118 as sound, and a process for outputting a mixed signal of audio data and a voice signal, which is obtained from the mixer 115, via the speaker 118 as sound.

Audio data or a voice signal is converted from a digital signal to an analog signal by the audio/voice output unit 116, and the analog signal is delivered to the speaker 118.

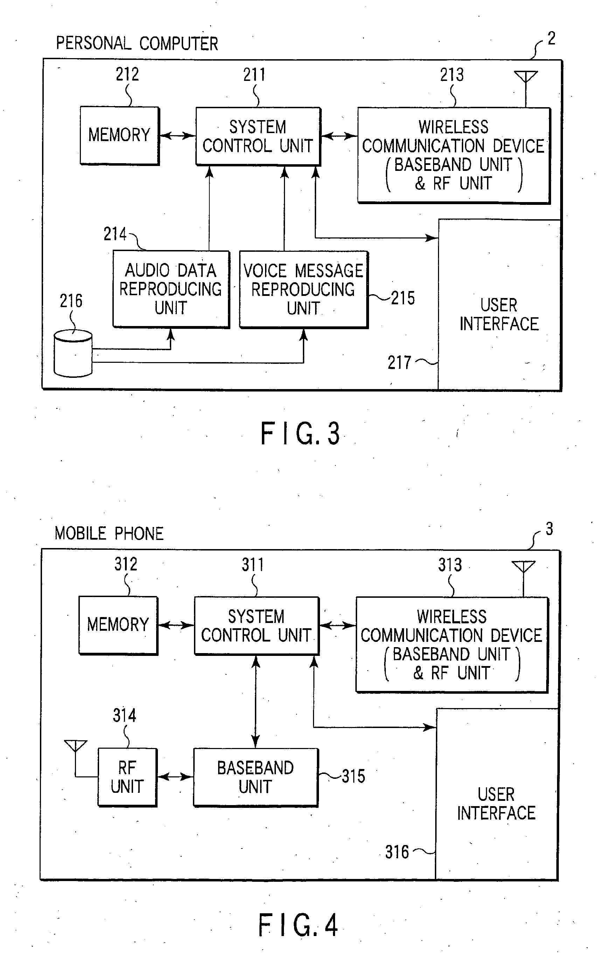

FIG. 3 shows a block diagram of an embodiment of the personal computer 2. In this specification, only the structure of the personal computer 2 relating to the communication with the headset 1 or mobile phone 3 will be described.

The personal computer 2, as shown in FIG. 3, comprises a system control unit 211, a memory 212, a wireless communication device 213, an audio data reproducing unit 214, a voice message reproducing unit 215, a storage device 216, and a user interface 217.

The system control unit 211 is a processor provided for controlling operations of the personal computer 2. The system control unit 211 executes a program stored in the memory 212, thereby controlling the wireless communication device 213, audio data reproducing unit 214, voice message reproducing unit 215, etc.

The memory 212 stores a program for controlling the operation of the personal computer 2. The program includes a routine for causing the system control unit 211 to execute the source function of A2DP, and a routine for causing the system control unit 211 to execute the HS function of HSP.

The wireless communication device 213 is a device for executing wireless communication with the headset 1 or mobile phone 3 according to procedures of the Bluetooth™ standard. The wireless communication device 213 includes a baseband processing unit and an RF unit. The wireless communication device 213 is used to transmit audio data such as music to the headset 1 by radio, or to transmit/receive voice signals by radio to/from the mobile phone 3.

The audio data reproducing unit 214 reads out of the storage device 216 an audio data stream of, for example, music, to be stream-reproduced by the headset 1, and delivers the audio data stream to the system control unit 211.

The voice message reproducing unit 215 reads out of the storage device 216 a voice message to be sent to the mobile phone 3, and delivers it to the system control unit 211. The voice message is an auto-answer message that is automatically sent to the counterpart telephone when the mobile phone 3 has received an incoming call from the counterpart telephone.

The user interface 217 comprises, for example, a display monitor, a keyboard, a pointing device, etc. The user interface 217 is used to prompt the user 4 to select audio data to be reproduced or prompt the user 4 to instruct start/stop of audio data reproduction. According to other embodiments, one or more of these functions may be performed using the headset 1 and/or mobile phone 3.

FIG. 4 shows a block diagram of the mobile phone 3, according to embodiments of the present invention.

The mobile phone 3, as shown in FIG. 4, comprises a system control unit 311, a memory 312, a wireless communication device 313, an RF unit 314, a baseband processing unit 315 and a user interface 316.

The system control unit 311 is a processor provided for controlling operations of the mobile phone 3. The system control unit 311 executes a program stored in the memory 312, thereby controlling the wireless communication device 313, RF unit 314, baseband processing unit 315, etc.

The memory 312 comprises, e.g. a non-volatile memory device. The memory 312 stores a program for controlling operations of the mobile phone 3. The program includes a routine for causing the system control unit 311 to execute the AG (Audio Gateway) function of HSP. In addition, the memory 312 is used as an incoming call history memory that stores an incoming call history of the mobile phone 3.

The wireless communication device 313 is a device for executing wireless communication with the personal computer 2 or headset 1 according to procedures of the Bluetooth™ standard. The wireless communication device 313 includes a baseband processing unit and an RF unit. The wireless communication device 313 is used to transmit/receive a voice signal for a voice call by radio to/from the personal computer 2 or headset 1.

The RF unit 314 and baseband processing unit 315 are wireless communication devices for executing a voice call with the counterpart telephone 6. Specifically, the RF unit 314 and baseband processing unit 315 perform transmission/reception of radio signals with a base station of the network 12 (FIG. 1). The user interface 316 comprises, for instance, a display and various operation buttons.

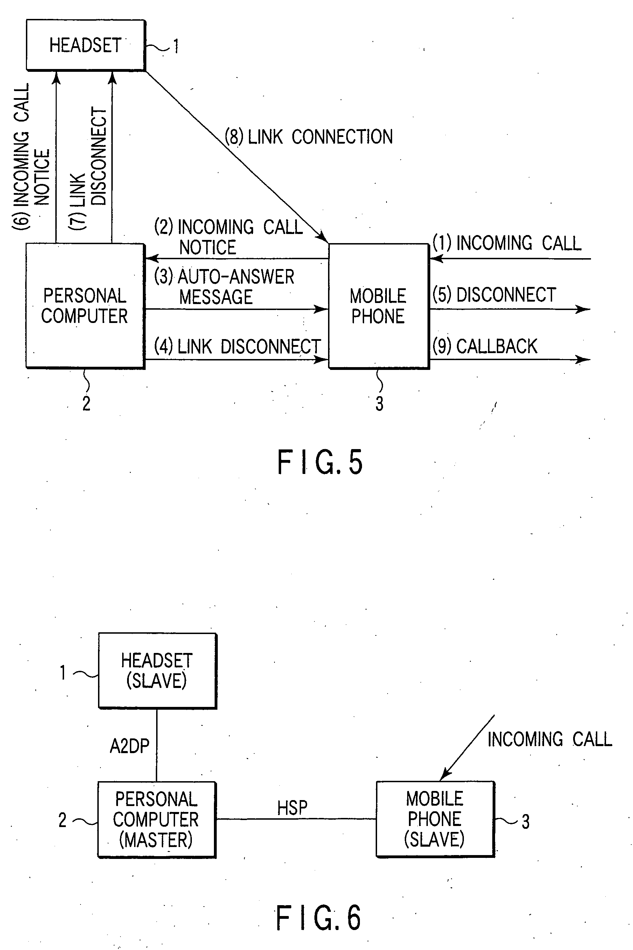

Referring now to FIG. 5, a description will now be given of an embodiment of a process for effecting switching from a connection mode in which the headset 1 is wirelessly connected to the personal computer 2 to a connection mode in which the headset 1 is wirelessly connected to the mobile phone 3, according to embodiments of the present invention.

Assume that the personal computer 2-functions as a master and the headset 1 and mobile phone 3 are wirelessly connected as slaves to the personal computer 2. The headset 1 is currently reproducing audio data sent from the personal computer 2.
(1) & (2) When the mobile phone 3 has received an incoming call from the telephone 6, the mobile phone 3 generates an incoming call notice indicative of the reception of the incoming call. The incoming call notice is sent to the personal computer 2 wirelessly connected to the mobile phone 3.
(3) Responding to the incoming call notice, the personal computer 2 transmits to the mobile phone 3 a voice message stored in the personal computer 2 as an auto-answer message, in order to notify the user 5 of telephone 6 that a callback will be made later. The voice message is transferred to the telephone 6 via the mobile phone 3.
(4) & (5) The personal computer 2 disconnects wireless connection (link) with the mobile phone 3, and the mobile phone 3 disconnects a voice call line with the telephone 6.
(6) & (7) The incoming call notice, which has been generated from the mobile phone 3, is sent to the headset 1 via the personal computer 2 as a communication request from the mobile phone 3. Then, the personal computer 2 disconnects the wireless connection (link) with the headset 1.
(8) Responding to the incoming call notice input from the mobile phone 3 via the personal computer 2, the headset 1 establishes wireless connection (link) for a voice call with the mobile phone 3. Thereby, the connection destination of the headset 1 is switched to the mobile phone 3.
(9) The mobile phone 3 makes a call (callback) to the telephone 6 using the telephone number of the telephone 6 stored in the mobile phone 3 as an incoming call history. Thus, a voice call line is established between the mobile phone 3 and telephone 6. The headset 1 performs transmission/reception of a voice signal with the mobile phone 3.

As has been described above, the incoming call notice is sent from the mobile phone 3 to the headset 1 via the personal computer 2. Then a voice call is executed directly between the headset 1 and mobile phone 3.

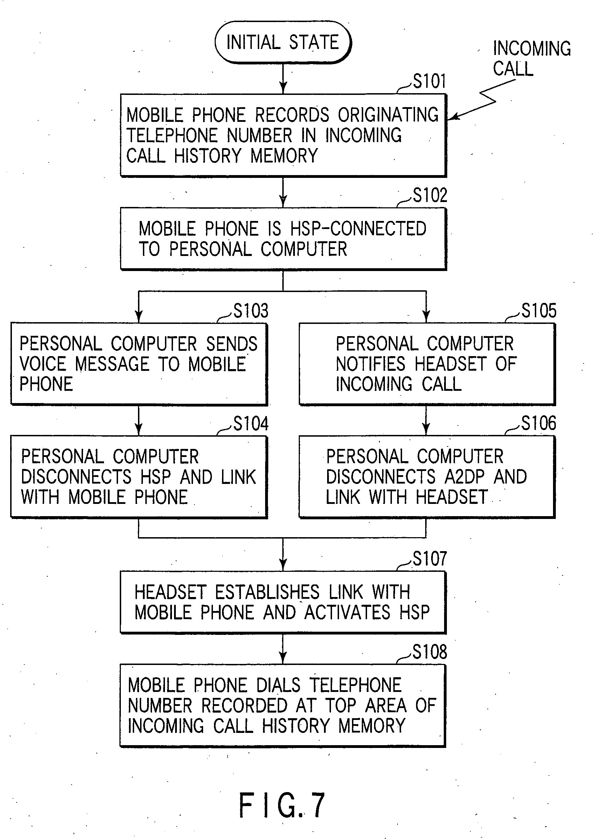

The above-described process for switching the connection mode of the headset 1 will now be described in detail with reference to FIGS. 6 and 7.

FIG. 6 illustrates the initial state in which the switching process has not yet been started. In the initial state, the headset 1 is reproducing audio data that is sent from the personal computer 2 to the headset 1. In the initial state, the headset 1 is wirelessly connected as a slave to the personal computer 2.

An audio data stream of music, etc. is sent from the personal computer 2 to the headset 1 via A2DP connection. The headset 1 executes a reproducing process for receiving the audio data stream and, at the same time, producing it as sound. The user 4 (FIG. 1) wearing the headset 1 listens to music produced as sound from the speaker 118 of headset 1. The personal computer 2 functions as a master, and the headset 1 and mobile phone 3 are wirelessly connected as slaves to the personal computer 2.

Assume that the user 5, using the telephone 6, has made a call to the mobile phone 3 of the user 4. If the mobile phone 3 has received an incoming call from the telephone 6, the process of the flow chart of FIG. 7 is executed.

Upon receiving the incoming call from the counterpart telephone 6, the mobile phone 3 records the telephone number of telephone 6 at a top area of the incoming call history memory (step S101). The mobile phone 3 establishes HSP voice call connection with the personal computer 2 in order to inform the personal computer 2, which is wirelessly connected to the mobile phone 3, that the mobile phone 3 has received the incoming call. In addition, the mobile phone 3 sends an incoming call notice to the personal computer 2 (step S102).

Via the HSP voice call connection with the mobile phone 3, the personal computer 2 transmits to the mobile phone 3 a voice signal corresponding to a voice message stored in advance in the personal computer 2 as an auto-answer message (step S103). An example of the voice message is as follows:
"Now the telephone is being switched. A callback will shortly be made to you."

The mobile phone 3 executes an off-hook process for responding to the incoming call, and establishes a voice call line with the originating-side telephone 6. Then, using the AG (Audio Gateway) of HSP, the mobile phone 3 sends to the originating-side telephone 6 the voice signal corresponding to the voice message that has been provided from the personal computer 2.

After transmitting the voice message to the mobile phone 3, the personal computer 2 disconnects the HSP voice call connection with the mobile phone 3 and also disconnects the physical wireless connection (link) established between the mobile phone 3 and personal computer 2 (step S104). Responding to the disconnect of the wireless connection between the mobile phone 3 and personal computer 2, the mobile phone 3 disconnects the voice call line with the telephone 6.

Following the above, the personal computer 2 sends the incoming call notice to the headset 1, and executes a process for releasing the current master/ slave relation between the personal computer 2 and headset 1 (step S105, S106). This process releases the headset 1 from the role of the slave of personal computer 2.

Specifically, in step S106, the personal computer 2 disconnects the A2DP connection with the headset 1 and also disconnects the physical wireless'connection (link) established between the personal computer 2 and headset 1.

The process of steps S105 and S106 may be performed in parallel with one of steps S103 and S104, or in parallel with both of steps S103 and S104. Alternatively, the process of steps S105 and S106 may be executed between steps S103 and S104.

If the headset 1 has received the incoming call notice via the personal computer 2 while executing the audio data reproducing process, the headset 1 recognizes that an event that requires execution of a voice call with the mobile phone 3 has occurred. After the wireless connection between the headset 1 and personal computer 2 has been disconnected, the headset 1 establishes wireless connection for the voice call with the mobile phone 3 (step S107).

To be more specific, the headset 1 establishes physical wireless connection (link) with the mobile phone 3. In addition, the headset 1 sends an HSP function activation request to the mobile phone 3 in order to execute transmission/reception of a voice signal for a voice call with the mobile telephone 3, thus establishing the HSP voice call connection between the headset 1 and mobile phone 3. The headset 1 functions as a master, and the mobile phone 3 functions as a slave of the headset 1.

Upon establishment of the HSP voice call connection with the headset 1, the mobile phone 3 dials a latest telephone number recorded in the incoming call history memory (step S108). Thereby, the voice call line is established between the mobile phone 3 and telephone 6, and the user 4 can have a phone conversation with the user 5 of telephone.6 through the headset 1 and mobile phone 3.

As has been described above, according to this embodiment, the incoming call notice is sent as a communication request from the mobile phone 3 to the headset 1 via the personal computer 2. Thereby, without the user 4 operating the headset 1 itself, the connection destination of the headset 1 can automatically be switched from the personal computer 2 to mobile phone 3.

According to the Bluetooth™ protocol specifications, there may be a case where 10 seconds at maximum are needed for establishing wireless connection. In this embodiment, the voice message is automatically sent from the personal computer 2 to the originating-side telephone 6 via the mobile phone 3. This prevents such an undesirable situation from occurring, that the user 5 of telephone 6 is forced to wait for 10 seconds without any response from the mobile phone 3.

If the condition of radio waves is not good, establishment of physical wireless connection may fail. In this embodiment, after the HSP connection has been established between the headset 1 and mobile phone 3, a callback is made from the mobile phone 3 to the telephone 6. This technique prevents such an undesirable situation from occurring, that the user 5 is forced to wait for 10 seconds and, after all, fails to make a phone conversation with the user 4 of mobile phone 3.

Alternatively, the headset 1 itself may disconnect wireless connection with the personal computer 2. In this case, upon receiving the incoming call notice from the personal computer 2, the headset 1 disconnects the wireless connection between itself and the personal computer 2. Thereby, the headset 1 is released from the role of the slave of personal computer 2, and can wirelessly connect to the mobile phone 3.

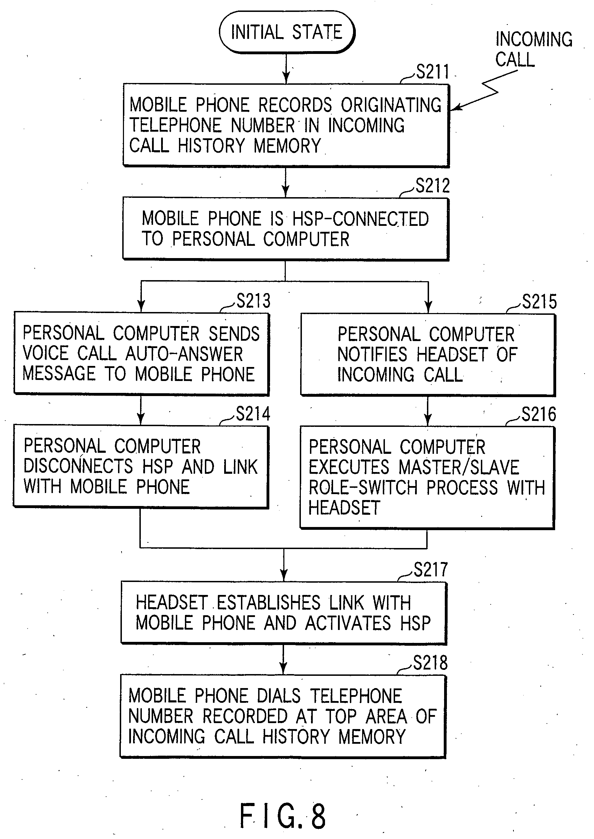

FIG. 8 is a flow chart illustrating; as a second embodiment of the invention, another example of a process for automatically switching the connection destination of the headset 1. The second embodiment will now be described.

In the flow chart of FIG. 8, steps S211 to S215, S217 and S218 are the same as steps S101 to S105, S107 and S108, respectively, in the flow chart of FIG. 7. Only the processing in step S216 differs from the flow chart of FIG. 7.

In the second embodiment, when the current master/slave relation between the personal computer 2 and headset 1 is released, the wireless connection between the personal computer 2 and headset 1 is not disconnected. Instead, a Master/Slave Role-Switch process is performed to switch the master/slave roles between the personal computer 2 and headset 1 (step S216).

Thereby, the headset 1 can establish new wireless connection with the mobile phone 3, while maintaining the wireless connection with the personal computer 2.

Specifically, in step S216, the personal computer 2 executes the Master/Slave Role-Switch process, which is specified in the baseband specifications of Bluetooth™.

After the master/slave role-switch process has been executed, the headset 1 functions as a master and the personal computer 2 functions as a slave, although the personal computer 2 previously functioned as the master.

Since the headset 1 has taken over the role of the master, the headset 1 is now connectable to a plurality of slaves. Thus, the headset 1 can connect to the mobile phone 3 functioning as a slave. The headset 1 is connected to the personal computer 2 and mobile phone 3 at the same time. This permits a phone conversation without stopping the audio data streaming reproduction using the A2DP connection.

According to the user 4's preference, the streaming reproduction of music, etc. may be paused during a phone conversation. In this case, in the first embodiment, when the streaming reproduction is to be resumed after the end of the phone conversation, wireless connection between the headset 1 and personal computer 2 needs to be re-established and a considerable length of time is consumed. However, in the second embodiment, since the wireless connection is maintained, the streaming reproduction can be resumed immediately.

Each of the above-described embodiments assumes the case where the mobile phone 3 has received an incoming call while the headset 1 is reproducing audio data sent from the personal computer 2 by radio. However, content data, which is sent from, e.g. the personal computer 2 to the headset 1, is not limited to audio data. For example, in a case where the headset 1 has a display device such as a video monitor, the display device of headset 1 can reproduce video data sent from the personal computer 2 by radio.

The incoming call that comes from the outside to the mobile phone 3 is not the sole trigger for effecting switching of the connection destination of the headset 1 from the personal computer 2 to the mobile phone 3. For example, the off-hook operation of mobile phone 3 by the user 4 may be a trigger for initiating the switching process. In this case, too, the communication request from the mobile phone 3 is sent to the headset 1 via the personal computer 2.

The connection destination of the headset 1 can be switched, not only from the personal computer 2 to mobile phone 3, but also between devices handling various content data such as video and audio.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An electronic apparatus for executing wireless communication with both a first device (2) and a second device (3), **characterized by** comprising:
a wireless communication unit (113) for wirelessly communicating with both the first device (2) and the second device (3);
a content data reproduction unit (116) for reproducing content data transmitted from the first device (2) to the electronic apparatus via a wireless connection between the first device (2) and the electronic apparatus; and
a processor (111) programmed for establishing a direct wireless connection between the electronic apparatus (1) and the second device (3) when the electronic apparatus (1) has received a communication request from the second device (3) via the first device (2).

2. The electronic apparatus according to claim 1, **characterized in that** the communication request is transmitted from the second device (3) to the first device (2) via a wireless connection between the first device (2) and the second device (3); and
wherein the communication request is then transmitted from the first device (2) to the electronic apparatus (1) via the wireless connection between the first device (2) and the electronic apparatus (1).

3. The electronic apparatus according to claim 1, **characterized in that** the electronic apparatus (1) receives the communication request during reproduction of the content data.

4. The electronic apparatus according to claim 1, **characterized in that** the first device (2) functions as a master, and the electronic apparatus (1) and the second device (3) are wirelessly connected as slaves to the first device (2), and
wherein establishing the direct wireless connection comprises starting a connecting process, after the first device (2) has executed a process for releasing a current master/slave relation between the first device (2) and the electronic apparatus (1).

5. The electronic apparatus according to claim 4, **characterized in that** the process for releasing the master/slave relation comprises a process for disconnecting the wireless connection between the first device (2) and the electronic apparatus (1).

6. The electronic apparatus according to claim 4, **characterized in that** the process for releasing the master/slave relation comprises a process for switching master/slave roles between the first device (2) and the electronic apparatus (1).

7. The electronic apparatus according to claim 1, **characterized in that** establishing the direct wireless connection comprises:
disconnecting the wireless connection between the first device (2) and the electronic apparatus (1); and
establishing the direct wireless connection between the electronic apparatus (1) and the second device (3), after disconnecting the wireless connection between the first device (2) and the electronic apparatus (1).

8. The electronic apparatus according to claim 1, **characterized in that** the second device (3) executes a call with a communication destination via an external network, and
wherein the communication request indicates that the second device (3) has received an incoming call from the communication destination via the external network.

9. The electronic apparatus according to claim 1, **characterized in that** the electronic apparatus (1) comprises a headset device having at least one of a speaker and a microphone.

10. The electronic apparatus according to claim 1, **characterized in that** the content data comprises at least one of audio data and video data.

11. The electronic apparatus according to claim 1, **characterized in that** reproducing the content data comprises performing streaming-reproduction of the content data.

12. The electronic apparatus according to claim 1, **characterized in that** the second device (3) is a mobile phone.

13. The electronic apparatus according to claim 1, **characterized in that** the wireless communication unit (113) executes wireless communication according to a Bluetooth™ standard.

14. In a communication system having an electronic apparatus (1) for executing wireless communication with both a first device (2) and a second device (3), a communication method, **characterized by** comprising:
reproducing, in the electronic apparatus (1), content data wirelessly transmitted from the first device (2) to the electronic apparatus (1); and
establishing a direct wireless connection between the electronic apparatus (1) and the second device (3) when the electronic apparatus (1) has received a communication request from the second device (3) via the first device (2).

15. The method according to claim 14, **characterized in that** the communication request is transmitted from the second device (3) to the first device (2) via a direct wireless connection between the first device (2) and the second device (3); and
wherein the communication request is then transmitted from the first device (2) to the electronic apparatus (1) via a direct wireless connection between the first device (2) and the electronic apparatus (1).

16. The method according to claim 14, **characterized in that** the electronic apparatus (1) receives the communication request during reproduction of the content data.

17. The method according to claim 14, **characterized in that** the first device (2) functions as a master, and the electronic apparatus (1) and the second device (3) are wirelessly connected as slaves to the first device (2), and
wherein establishing a direct wireless connection comprises causing the electronic apparatus (1) to start a connecting process for establishing the direct wireless connection after the first device (2) has executed a process for releasing a current master/slave relation between the first device (2) and the electronic apparatus (1).

18. The method according to claim 17, **characterized in that** the process for releasing the master/slave relation comprises a process for disconnecting the wireless connection between the first device (2) and the electronic apparatus (1).

19. The method according to claim 17, **characterized in that** the process for releasing the master/slave relation comprises a process for switching master/slave roles between the first device (2) and the electronic apparatus (1).

20. The method according to claim 14, **characterized in that** establishing a direct wireless connection comprises:
disconnecting the direct wireless connection between the first device (2) and the electronic apparatus (1); and
establishing the direct wireless connection between the electronic apparatus (1) and the second device (3) after the wireless connection between the first device (2) and the electronic apparatus (1) is disconnected.

21. The method according to claim 14, **characterized in that** the communication system further comprises a communication destination communicating with the second device (3) via an external network; and
wherein the communication request indicates that the second device (3) has received an incoming call from the communication destination via the external network.
